(19) Europäisches Patentamt / European Patent Office / Office européen des brevets

(11) **EP 2 977 769 B1**

(12) **FASCICULE DE BREVET EUROPEEN**

(45) Date de publication et mention
de la délivrance du brevet:
**21.06.2017 Bulletin 2017/25**

(51) Int Cl.:
*G01P 5/14* (2006.01)     *G01P 5/175* (2006.01)
*G01P 13/02* (2006.01)

(21) Numéro de dépôt: **15176827.2**

(22) Date de dépôt: **15.07.2015**

(54) **PROCÉDÉ ET DISPOSITIF D ESTIMATION DU NOMBRE DE MACH D'UN AÉRONEF**

VERFAHREN UND VORRICHTUNG ZUM SCHÄTZEN DER MACHZAHL EINES LUFTFAHRZEUGS

METHOD AND DEVICE FOR ESTIMATING THE MACH NUMBER OF AN AIRCRAFT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.07.2014 FR 1457105**

(43) Date de publication de la demande:
**27.01.2016 Bulletin 2016/04**

(73) Titulaire: **AIRBUS OPERATIONS (SAS)
31060 Toulouse (FR)**

(72) Inventeurs:
• **SEMAT, Maxime
31200 TOULOUSE (FR)**
• **DELPORTE, Martin
31470 FONSORBES (FR)**

(74) Mandataire: **Gevers & Orès
41 avenue de Friedland
75008 Paris (FR)**

(56) Documents cités:
**WO-A1-2013/017746     FR-A1- 2 977 942
GB-A- 2 424 957**

EP 2 977 769 B1

## Description

La présente invention concerne un procédé et un dispositif d'estimation du nombre de Mach d'un aéronef.

On sait que le nombre de Mach d'un aéronef est défini comme le rapport entre la vitesse de l'aéronef et la vitesse du son dans les conditions de vol de l'aéronef. Les lois de la thermodynamique permettent de définir une relation entre le nombre de Mach de l'écoulement d'air, la pression totale Pt et la pression statique Ps, qui se formule comme suit :

$$M = \sqrt{\frac{2}{\gamma - 1}\left[\left(\frac{Pt}{Ps}\right)^{\frac{\gamma-1}{\gamma}} - 1\right]}$$

Dans cette équation, $\gamma$ représente l'index adiabatique, qui est égal à 1,4 pour l'air. Grâce à cette équation, les mesures de la pression statique Ps et de la pression totale Pt sont suffisantes pour calculer le nombre de Mach M.

La pression statique Ps correspond à la pression atmosphérique qui dépend de l'altitude de l'aéronef et de la température du milieu ambiant. Elle peut être mesurée à l'aide d'une sonde placée sur l'aéronef.

En outre, la pression totale Pt correspond à la somme de la pression statique et de la pression d'impact due à la vitesse de l'aéronef. La pression totale Pt est mesurée par des sondes Pitot.

En cas d'erreurs provenant des sondes de Pitot, le nombre de Mach calculé à l'aide de l'équation précitée peut donc être erroné.

On connaît par le brevet CA2783222, une méthode de mesure du nombre de Mach à l'aide des mesures de deux pressions statiques au niveau du moteur. Ces mesures permettent de réaliser une estimation d'une pression statique Ps et une estimation d'une pression totale Pt. En introduisant ces valeurs de pression estimées dans l'équation précitée, on obtient alors une estimation du nombre de Mach M. Cependant, la sonde de pression statique qui permet de réaliser une telle estimation d'une pression totale n'est pas disponible sur tous les types d'aéronefs et sur tous les types de moteurs.

Par ailleurs, on connaît :

- par le document WO 2013/017746, un système permettant de mesurer la vitesse, qui est insensible aux conditions givrantes et aux fortes pluies. Ce système permet de calculer la vitesse de l'aéronef par mesure d'une pression statique et d'une pression dynamique. Ce document ne divulgue pas de procédé permettant de déterminer le nombre de Mach en utilisant uniquement deux mesures de pression statique ; et
- par le document GB 2 424 957, un système de calcul de paramètre d'un aéronef (dont le nombre de Mach) utilisant des rapports de pression. Il est indiqué qu'à partir de N valeurs de pression statique obtenues à différents endroits de l'aéronef, il est possible de déduire le nombre de Mach, sans toutefois préciser comment cela est réalisé. Il est précisé que le nombre N de valeurs de pression statique est d'abord utilisé pour déduire une pression statique et une pression totale avant de pouvoir en déduire les paramètres de l'aéronef.

La présente invention concerne un procédé d'estimation du nombre de Mach d'un aéronef, permettant d'estimer le nombre de Mach sans utiliser une valeur de pression totale, afin d'être en mesure notamment de fournir au pilote des informations du nombre de Mach même en l'absence d'une valeur de pression totale fiable disponible sur l'aéronef.

A cet effet, ledit procédé d'estimation du nombre de Mach comprend, selon l'invention, des étapes successives suivantes consistant, de façon automatique, à :

A) mesurer une première pression statique Ps de l'air ambiant au niveau d'une première zone de mesure située sur l'aéronef ;

B) mesurer une deuxième pression P de l'air ambiant, au moyen d'au moins une sonde de pression statique, au niveau d'une deuxième zone de mesure située sur l'aéronef, ladite deuxième pression P présentant une valeur inférieure à ladite première pression statique Ps, la première zone de mesure sur l'aéronef étant à une position moins perturbée par le flux d'air s'écoulant sur l'aéronef que ne l'est la deuxième zone, la deuxième zone de mesure étant localisée dans la nacelle d'un moteur de l'aéronef ;

C) estimer un nombre de Mach de l'aéronef, à l'aide de l'expression suivante :

$$M = \sqrt{\frac{\sqrt{k^4 + 4k^2} - k^2}{2}}$$

le paramètre k vérifiant l'expression $k = Z(1 - \frac{P}{Ps})$ dans laquelle Z est un paramètre dépendant de la position de la deuxième zone de mesure sur l'aéronef, le paramètre Z vérifiant la relation suivante $Z = (aN1 + b)$ dans laquelle a et b sont des constantes déterminées de façon empirique et N1 représente la vitesse de rotation de la soufflante du moteur (10) ; et

D) transmettre le nombre de Mach ainsi estimé à un système utilisateur.

Grâce à l'invention, on est en mesure d'estimer le nombre de Mach en utilisant seulement deux mesures de pression statique. Ainsi, il n'est pas nécessaire d'utiliser une valeur de pression totale (mesurée par des sondes de Pitot) et on est donc en mesure de calculer un nombre de Mach estimé, même en l'absence d'une valeur de pression totale fiable disponible (absence de valeur ou valeur erronée) sur l'aéronef.

Aucun des documents WO 2013/017746 et GB 2 424 957 précités ne divulgue la formule précédente permettant d'estimer le nombre de Mach, et aucun de ces documents ne divulgue le fait de déduire le nombre de Mach en utilisant uniquement deux mesures de pression statique.

Selon différents modes de réalisation de l'invention, qui peuvent être pris ensemble ou séparément :

- l'étape A comprend des sous-étapes consistant à :

  Aa) mesurer une première pression statique intermédiaire Ps' et une deuxième pression statique intermédiaire Ps" dans ladite première zone de mesure, respectivement, au niveau d'un premier point de mesure intermédiaire et d'un deuxième point de mesure intermédiaire ; et
  Ab) estimer la première pression statique Ps en effectuant une moyenne de la première et de la deuxième pressions statiques intermédiaires Ps' et Ps" mesurées à l'étape précédente Aa) ;

- le premier point de mesure intermédiaire et le deuxième point de mesure intermédiaire sont situés sur un fuselage de l'aéronef, de part et d'autre d'un axe longitudinal de l'aéronef ;

La présente invention concerne également un dispositif d'estimation du nombre de Mach d'un aéronef.

Selon l'invention, ledit dispositif d'estimation comprend :

- une première unité de mesure configurée pour mesurer une première pression statique Ps de l'air ambiant au niveau d'une première zone de mesure de l'aéronef ;
- une deuxième unité de mesure configurée pour mesurer une deuxième pression P de l'air ambiant, au moyen d'au moins une sonde de pression statique, au niveau d'une deuxième zone de mesure de l'aéronef, la deuxième pression P présentant une valeur inférieure à la première pression statique Ps, la première zone de mesure sur l'aéronef étant à une position moins perturbée par le flux d'air s'écoulant sur l'aéronef que ne l'est la deuxième zone, la deuxième zone de mesure étant localisée dans la nacelle d'un moteur de l'aéronef ;
- une unité de calcul configurée pour estimer un nombre de Mach de l'aéronef, à l'aide de l'expression suivante :

$$M = \sqrt{\frac{\sqrt{k^4 + 4k^2} - k^2}{2}}$$

le paramètre k vérifiant l'expression $k = Z(1 - \frac{P}{Ps})$ dans laquelle Z est un paramètre dépendant de la position de la deuxième zone de mesure sur l'aéronef, le paramètre Z vérifiant la relation suivante Z = (aN1 +b) dans laquelle a et b sont des constantes déterminées de façon empirique et N1 représente la vitesse de rotation de la soufflante du moteur (10) ; et

- une unité de transmission de données configurée pour transmettre le nombre de Mach estimé à un système utilisateur.

L'invention concerne également un aéronef, en particulier un avion de transport, qui comprend un dispositif tel que celui décrit précédemment.

Dans un mode de réalisation particulier, la première unité de mesure comprend une première et une deuxième sondes de mesure configurées pour mesurer une première pression statique intermédiaire Ps' et une deuxième pression statique intermédiaire Ps", ladite première unité de mesure comprenant en outre un calculateur configuré pour déterminer la première pression statique Ps en effectuant une moyenne de la première et de la deuxième pressions statiques intermédiaires Ps' et Ps".

Avantageusement, la première et la deuxième sondes de mesure sont positionnées sur un fuselage de l'aéronef, de part et d'autre d'un axe longitudinal de l'aéronef.

La figure 1 est une vue schématique représentant un dispositif d'estimation du nombre de Mach d'un aéronef.
La figure 2 est une vue schématique représentant un aéronef comprenant le dispositif de la figure 1.
La figure 3 est une vue schématique représentant les étapes de calcul d'une unité de calcul du dispositif de la figure 1.

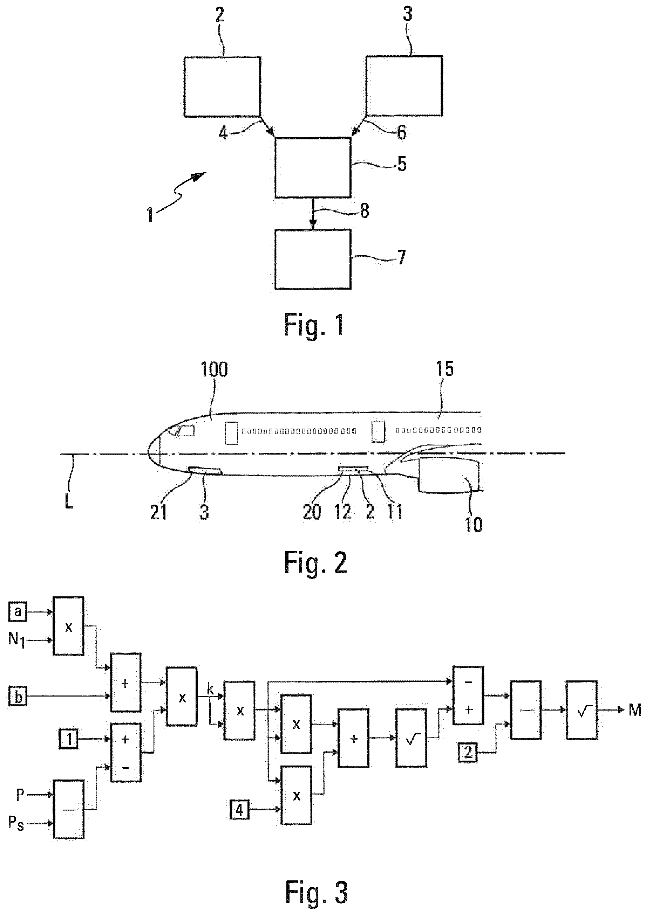

Un dispositif d'estimation 1 du nombre de Mach M d'un aéronef, notamment d'un avion de transport, est représenté schématiquement sur la figure 1.

Un tel dispositif d'estimation 1 (noté ci-après dispositif 1) comprend selon l'invention une première unité de mesure 2 configurée pour mesurer une première pression statique Ps de l'air ambiant au niveau d'une première zone de mesure de l'aéronef et une deuxième unité de mesure 3 configurée pour mesurer une deuxième pression P de l'air ambiant, au niveau d'une deuxième zone de mesure de l'aéronef, la deuxième pression P présentant une valeur inférieure à la première pression statique Ps. La première unité de mesure 2 mesure la première pression statique à l'aide d'au moins une sonde de mesure de pression statique, et notamment de plusieurs sondes de mesure comme décrit dans la suite.

De la même manière, la deuxième unité de mesure 3 mesure la deuxième pression P à l'aide d'au moins une sonde de mesure de pression statique dite sonde de pression statique.

Le dispositif 1 comprend également une unité de calcul 5 configurée pour estimer le nombre de Mach à l'aide de l'expression suivante :

$$M = \sqrt{\frac{\sqrt{k^4 + 4k^2} - k^2}{2}}$$

le paramètre k vérifiant l'expression $k = Z\left(1 - \frac{P}{Ps}\right)$ dans laquelle Z est un paramètre dépendant de la position de la deuxième zone de mesure sur l'aéronef.

Les données recueillies par la première et la deuxième unités de mesure 2 et 3 sont transmises à l'unité de calcul 5, respectivement, par l'intermédiaire de liaisons 4 et 6.

Le dispositif 1 comprend, en outre, une unité de transmission de données (liaison 8) configurée pour transmettre le nombre de Mach estimé à un système utilisateur 7, par exemple à une unité d'affichage ou à un système (ou calculateur) embarqué.

On choisit des zones de mesure de la première pression statique Ps et de la deuxième pression P, qui permettent d'obtenir une différence de valeurs entre la première pression statique Ps et la deuxième pression P. En effet, plus la différence entre la valeur de la première pression statique Ps et la valeur de la deuxième pression P est importante, meilleure est l'estimation du nombre de Mach M et donc de la vitesse air CAS de l'aéronef. A cet effet, on prévoit notamment de positionner la première unité de mesure 2 à un endroit de l'aéronef où la pression statique ne dépend pas beaucoup du nombre de Mach M et la deuxième unité de mesure 3 à un endroit de l'aéronef qui dépend au contraire beaucoup du nombre de Mach M. Autrement dit, on choisit de positionner la première zone de mesure sur l'aéronef à une position moins perturbée par le flux d'air s'écoulant sur l'aéronef que ne l'est la deuxième zone.

En outre, plus le nombre de Mach est grand, plus la mesure de la deuxième pression P est petite et inférieure à la première pression statique Ps. La fonction Ps / P est donc une fonction monotone et croissante en fonction du nombre de Mach.

Ainsi, l'estimation du nombre de Mach est d'autant plus précise que le nombre de Mach est grand - tant que l'écoulement reste subsonique - et que le quotient Ps / P est grand.

Par conséquent, de préférence, pour obtenir la meilleure précision possible et pour maximiser le domaine de validité de l'estimation, on place la deuxième zone de mesure de la deuxième pression P de sorte à maximiser le quotient Ps / P.

Ainsi, en connaissant la valeur du ratio entre P et Ps, on est capable de connaître la fourchette de vitesses à l'intérieur de laquelle se trouve l'estimation de la vitesse de l'aéronef.

La figure 2 illustre un exemple de positionnement des première et deuxième zones de mesure 20 et 21 permettant d'obtenir une telle différence de valeurs entre la première pression statique Ps et la deuxième pression P.

La première zone de mesure 20 est située sur le fuselage 15 de l'aéronef 100. Comme expliqué précédemment, la première unité de mesure 2 comprend au moins une sonde de mesure située dans la première zone de mesure 20. Dans l'exemple de réalisation illustré à la figure 2, la première unité de mesure 2 comprend une pluralité de sondes 11 et 12 et en particulier deux sondes dites première et deuxième sondes 11 et 12 mesurant respectivement une première et une deuxième pressions statiques intermédiaires Ps' et Ps". La première unité de mesure 2 comprend alors un calculateur (non représenté) qui est configuré pour déterminer la première pression statique Ps en effectuant, de préférence, une moyenne des première et deuxième pressions intermédiaires Ps' et Ps" mesurées.

Dans un mode de réalisation particulier de l'invention, la première et la deuxième pressions statiques intermédiaires Ps' et Ps" sont mesurées, respectivement, de part et d'autre d'un axe longitudinal L de l'aéronef 100 au niveau d'un premier et d'un deuxième points de mesure intermédiaires. On comprend ici que la première et la deuxième sondes 11 et 12 sont situées de part et d'autre de l'axe longitudinal L de l'aéronef 100.

Selon une première variante représentée sur la figure 2 de ce mode de réalisation particulier, la première et la deuxième pressions statiques intermédiaires Ps' et Ps" sont mesurées sur les côtés latéraux de l'aéronef 100. La première et la deuxième sondes 11, 12 sont alors situées sur les côtés de l'aéronef 100. Dans cette variante de réalisation, la première pression statique Ps est donc mesurée en effectuant une moyenne de deux pressions intermédiaire Ps' et Ps" mesurées sur les côtés de l'aéronef 100. En moyennant la première pression statique de la sorte, on réduit les erreurs dues à l'angle de dérapage de l'aéronef.

Dans une variante particulière, la première et la deuxième pressions statiques intermédiaires Ps' et Ps" sont mesurées sur les deux faces d'un empennage vertical (non représenté) de l'aéronef 100. La figure 2 montre un exemple qui ne fait pas partie de l'invention revendiquée. Selon cet exemple, la deuxième zone de mesure 21 (relative à l'unité de mesure 3) est localisée sur le fuselage 15 de l'aéronef 100. La deuxième zone de mesure 21 est en particulier située devant la première zone de mesure 20, car à cet endroit de l'aéronef 100, la mesure de la pression statique est plus sensible à l'écoulement de l'air et la deuxième pression P mesurée sera inférieure à la première pression statique Ps. Dans cette configuration, le paramètre Z vérifie la relation suivante $Z = \dfrac{2}{Cpo*\gamma}$ dans laquelle Cpo est un coefficient de pression constant et $\gamma$ l'indice adiabatique de l'air. Cpo ne dépend pas du nombre de Mach M, mais de la forme de l'objet sur lequel il se trouve. Selon l'invention, la deuxième zone de mesure 21 est localisée dans la nacelle d'un moteur 10 de l'aéronef 100. On choisit de positionner la deuxième zone de mesure 21 dans la nacelle du moteur 10 de l'aéronef 100, parce que la deuxième pression P mesurée dans cette zone est inférieure à celle mesurée dans la première zone de mesure localisée sur le fuselage. Le paramètre Z vérifie alors la relation suivante $Z = (aN1 + b)$ dans laquelle a et b sont des constantes déterminées de façon empirique et N1 représente la vitesse de rotation de la soufflante du moteur 10. Les constantes a et b sont déterminées de façon empirique notamment à l'aide de mesures effectuées lors de vols de test.

La figure 3 illustre de manière schématique les étapes de calcul réalisées par l'unité de calcul 5.

## Revendications

1. Procédé d'estimation du nombre de Mach d'un aéronef (100), comprenant les étapes successives suivantes consistant, de façon automatique, à :

A) mesurer une première pression statique Ps de l'air ambiant au niveau d'une première zone de mesure (20) située sur l'aéronef (100) ;
B) mesurer une deuxième pression P de l'air ambiant, au moyen d'au moins une sonde de pression statique, au niveau d'une deuxième zone de mesure (21) située sur l'aéronef (100), ladite deuxième pression P présentant une valeur inférieure à la première pression statique Ps, la première zone de mesure (20) sur l'aéronef (100) étant à une position moins perturbée par le flux d'air s'écoulant sur l'aéronef (100) que ne l'est la deuxième zone (21), la deuxième zone de mesure (21) étant localisée dans la nacelle d'un moteur (10) de l'aéronef (100) ;
C) estimer un nombre de Mach de l'aéronef (100), à l'aide de l'expression suivante :

$$M = \sqrt{\dfrac{\sqrt{k^4 + 4k^2} - k^2}{2}}$$

le paramètre k vérifiant l'expression $k = Z(1 - \dfrac{P}{Ps})$ dans laquelle Z est un paramètre dépendant de la position de la deuxième zone de mesure (21) sur l'aéronef (100), le paramètre Z vérifiant la relation suivante $Z = (aN1 + b)$ dans laquelle a et b sont des constantes déterminées de façon empirique et N1 représente la vitesse de rotation de la soufflante du moteur (10) ; et
D) transmettre le nombre de Mach ainsi estimé à un système utilisateur (7).

2. Procédé selon la revendication 1, dans lequel l'étape A comprend des sous-étapes consistant à :

Aa) mesurer une première pression statique intermédiaire Ps' et une deuxième pression statique intermédiaire Ps" dans ladite première zone de mesure (20), respectivement, au niveau d'un premier point de mesure intermédiaire et d'un deuxième point de mesure intermédiaire ; et
Ab) estimer la première pression statique Ps en effectuant une moyenne de la première et de la deuxième pressions statiques intermédiaires Ps' et Ps" mesurées à l'étape précédente Aa).

3. Procédé selon la revendication 2, dans lequel le premier point de mesure intermédiaire et le deuxième point de mesure intermédiaire sont situés sur un fuselage (15) de l'aéronef (100), respectivement de part et d'autre d'un axe longitudinal (L) de l'aéronef (100).

4. Dispositif d'estimation du nombre de Mach d'un aéronef, comprenant:

- une première unité de mesure (2) configurée pour mesurer une première pression statique Ps de l'air ambiant au niveau d'une première zone de mesure (20) de l'aéronef (100) ;
- une deuxième unité de mesure (3) configurée pour mesurer une deuxième pression P de l'air ambiant, au moyen d'au moins une sonde de pression statique, au niveau d'une deuxième zone de mesure (21) de l'aéronef (100), la deuxième pression P présentant une valeur inférieure à la première pression statique Ps, la première zone de mesure (20) sur l'aéronef (100) étant à une position moins perturbée par le flux d'air s'écoulant sur l'aéronef (100) que ne l'est la deuxième zone (21), la deuxième zone de mesure (21) étant localisée dans la nacelle d'un moteur (10) de l'aéronef (100) ;
- une unité de calcul (5) configurée pour estimer un nombre de Mach de l'aéronef (100), à l'aide de l'expression suivante :

$$M = \sqrt{\frac{\sqrt{k^4 + 4k^2} - k^2}{2}}$$

le paramètre k vérifiant l'expression

$$k = Z\left(1 - \frac{P}{Ps}\right)$$ dans laquelle Z est un paramètre dépendant de la position de la deuxième zone de mesure (21) sur l'aéronef (100), le paramètre Z vérifiant la relation suivante $Z = (aN1 + b)$ dans laquelle a et b sont des constantes déterminées de façon empirique et N1 représente la vitesse de rotation de la soufflante du moteur (10) ; et

- une unité de transmission de données (8) configurée pour transmettre le nombre de Mach estimé à un système utilisateur (7).

5. Aéronef comprenant un dispositif selon la revendication 4.

6. Aéronef selon la revendication 5, dans lequel la première unité de mesure (2) comprend une première et une deuxième sondes de mesure (11, 12) configurées pour mesurer une première pression statique intermédiaire Ps' et une deuxième pression statique intermédiaire Ps", ladite première unité de mesure (2) comprenant en outre un calculateur configuré pour déterminer la première pression statique Ps en effectuant une moyenne de la première et de la deuxième pressions statiques intermédiaires Ps' et Ps".

7. Aéronef selon la revendication 6, dans lequel la première et la deuxième sondes de mesure (11, 12) sont positionnées sur un fuselage (15) de l'aéronef (100), de part et d'autre d'un axe longitudinal (L) de l'aéronef (100).

**Patentansprüche**

1. Verfahren zum Abschätzen der Mach-Zahl eines Flugzeugs (100), das die folgenden aufeinanderfolgenden Schritte umfasst, die darin bestehen, automatisch:

A) einen ersten statischen Druck Ps der Umgebungsluft in einem ersten Messbereich (20), der sich an dem Flugzeug (100) befindet, zu messen;
B) einen zweiten Druck P der Umgebungsluft mittels mindestens eines statischen Drucksensors in einem zweiten Messbereich (21), der sich an dem Flugzeug (100) befindet, zu messen, wobei der zweite Druck P einen niedrigeren Wert als der erste statische Druck Ps aufweist, wobei der erste Messbereich (20) an dem Flugzeug (100) sich an einer Position befindet, die geringer durch den Luftstrom beeinflusst wird, der über das Flugzeug (100) strömt, als es der zweite Bereich (21) ist, wobei sich der zweite Messbereich (21) in der Gondel eines Motors (10) des Flugzeugs (100) befindet;
C) eine Mach-Zahl des Flugzeugs (100) mit Hilfe des folgenden Ausdrucks zu schätzen:

$$M = \sqrt{\frac{\sqrt{k^4 + 4k^2} - k^2}{2}},$$

wobei der Parameter k den Ausdruck

$$k = Z\left(1 - \frac{P}{P_S}\right)$$ erfüllt, wobei Z ein Parameter ist, der von der Position des zweiten Messbereichs (21) an dem Flugzeug (100) abhängig ist, wobei der Parameter Z die folgende Beziehung $Z = (aN1 + b)$ erfüllt, in der a und b empirisch bestimmte Konstanten sind und N1 die Rotationsgeschwindigkeit des Gebläses des Motors (10) darstellt; und
D) die so geschätzte Mach-Zahl an ein Benutzersystem (7) zu senden.

2. Verfahren nach Anspruch 1, wobei der Schritt A die folgenden Teilschritte umfasst, die darin bestehen:

Aa) einen ersten statischen Zwischendruck Ps' und einen zweiten statischen Zwischendruck Ps" in dem ersten Messbereich (20) an einem ersten Zwischenmesspunkt bzw. einem zweiten Zwischenmesspunkt zu messen; und
Ab) den ersten statischen Druck Ps zu schätzen, indem ein Durchschnitt des ersten und zweiten statischen Zwischendrucks Ps' und Ps" gebildet wird, die im vorherigen Schritt Aa) gemessen wurden.

3. Verfahren nach Anspruch 2, wobei sich der erste Zwischenmesspunkt und der zweite Zwischenmesspunkt an einem Rumpf (15) des Flugzeugs (100) jeweils auf beiden Seiten einer Längsachse (L) des Flugzeugs (100) befinden.

4. Vorrichtung zum Abschätzen der Mach-Zahl eines Flugzeugs, die umfasst:

- eine erste Messeinheit (2), die konfiguriert ist, einen ersten statischen Druck Ps der Umgebungsluft in einem ersten Messbereich (20) des Flugzeugs (100) zu messen;

- eine zweite Messeinheit (3), die konfiguriert ist, einen zweiten Druck P der Umgebungsluft mittels mindestens eines statischen Drucksensors in einem zweiten Messbereich (21) des Flugzeugs (100) zu messen, wobei der zweite Druck P einen niedrigeren Wert als der erste statische Druck Ps aufweist, wobei der erste Messbereich (20) an dem Flugzeug (100) sich an einer Position befindet, die geringer durch den Luftstrom beeinflusst wird, der über das Flugzeug (100) strömt, als es der zweite Bereich (21) ist, wobei sich der zweite Messbereich (21) in der Gondel eines Motors (10) des Flugzeugs (100) befindet; - eine Recheneinheit (5), die konfiguriert ist, eine Mach-Zahl des Flugzeugs (100) mit Hilfe des folgenden Ausdrucks zu schätzen:

$$M = \sqrt{\frac{\sqrt{k^4 + 4k^2} - k^2}{2}},$$

wobei der Parameter k den Ausdruck

$$k = Z\left(1 - \frac{P}{P_s}\right)$$ erfüllt, wobei Z ein Parameter ist, der von der Position des zweiten Messbereichs (21) an dem Flugzeug (100) abhängig ist, wobei der Parameter Z die folgende Beziehung $Z = (aN1 + b)$ erfüllt, in der a und b empirisch bestimmte Konstanten sind und N1 die Rotationsgeschwindigkeit des Gebläses des Motors (10) darstellt; und

- eine Datenübertragungseinheit (8), die konfiguriert ist, die so geschätzte Mach-Zahl an ein Benutzersystem (7) zu senden.

5. Flugzeug, das eine Vorrichtung nach Anspruch 4 umfasst.

6. Flugzeug nach Anspruch 5, wobei die erste Messeinheit (2) eine erste und eine zweite Messsonde (11, 12) umfasst, die konfiguriert sind, einen ersten statischen Zwischendruck Ps' und einen zweiten statischen Zwischendruck Ps" zu messen, wobei die erste Messeinheit (2) ferner einen Rechner umfasst, der konfiguriert ist, den ersten statischen Druck Ps zu bestimmen, indem er einen Durchschnitt des ersten und des zweiten statischen Zwischendrucks Ps' und Ps" bildet.

7. Flugzeug nach Anspruch 6, wobei die erste und die zweite Messsonde (11, 12) an einem Rumpf (15) des Flugzeugs (100) auf beiden Seiten einer Längsachse (L) des Flugzeugs (100) positioniert sind.

**Claims**

1. A method for estimating the Mach number of an aircraft (100), which comprises the following successive steps consisting, in an automatic manner, in:

A) measuring a first static pressure Ps of the ambient air in a first measurement zone (20) situated on the aircraft (100);
B) measuring a second pressure P of the ambient air, by means of at least one static pressure probe, in a second measurement zone (21) situated on the aircraft (100), said second pressure P having a value lower than the first static pressure Ps, the first measurement zone (20) on the aircraft (100) being at a position less disturbed by the flow of air flowing along the aircraft than the second zone (21), the second measurement zone (21) being located in the nacelle of an engine (10) of the aircraft (100);
C) estimating a Mach number of the aircraft (100), using the following expression:

$$M = \sqrt{\frac{\sqrt{k^4 + 4k^2} - k^2}{2}}$$

the parameter k bearing out the expression

$$k = Z(1 - \frac{P}{Ps})$$ in which Z is a parameter dependent on the position of the second measurement zone (21) on the aircraft (100), the parameter Z bearing out the following relationship $Z = (aN1 + b)$ in which a and b are constants determined empirically and N1 represents the speed of rotation of the fan of the engine (10); and
D) transmitting the duly estimated Mach number to a user system (7).

2. The method as claimed in claim 1, wherein the step A comprises substeps consisting in:

Aa) measuring a first intermediate static pressure Ps' and a second intermediate static pressure Ps" in said first measurement zone (20), respectively, at a first intermediate measurement point and a second intermediate measurement point; and
Ab) estimating the first static pressure Ps by averaging the first and the second intermediate static pressures Ps' and Ps" measured in the preceding step Aa).

3. The method as claimed in claim 2, wherein the first intermediate measurement point and the second intermediate measurement point are situated on a fuselage (15) of the aircraft (100), respectively on either side of a longitudinal axis (L) of the aircraft (100).

4. A device for estimating the Mach number of an aircraft, which comprises:

   - a first measurement unit (2) configured to measure a first static pressure Ps of the ambient air in a first measurement zone (20) of the aircraft (100);
   - a second measurement unit (3) configured to measure a second pressure P of the ambient air, by means of at least one static pressure probe, in a second measurement zone (21) of the aircraft (100), the second pressure P having a value lower than the first static pressure Ps, the first measurement zone (20) on the aircraft (100) being at a position less disturbed by the flow of air flowing along the aircraft (100) than the second zone (21), the second measurement zone (21) being located in the nacelle of an engine (10) of the aircraft (100);
   - a computation unit (5) configured to estimate a Mach number of the aircraft (100), using the following expression:

$$M = \sqrt{\frac{\sqrt{k^4 + 4k^2} - k^2}{2}}$$

   the parameter k bearing out the expression $k = Z(1 - \frac{P}{Ps})$ in which Z is a parameter dependent on the position of the second measurement zone (21) on the aircraft (100), the parameter Z bearing out the following relationship $Z = (aN1 + b)$ in which a and b are constants determined empirically and N1 represents the speed of rotation of the fan of the engine (10); and
   - a data transmission unit (8) configured to transmit the estimated Mach number to a user system (7).

5. An aircraft comprising a device as claimed in claim 4.

6. The aircraft as claimed in claim 5, wherein the first measurement unit (2) comprises a first and a second measurement probes (11, 12) configured to measure a first intermediate static pressure Ps' and a second intermediate static pressure Ps", said first measurement unit (2) further comprising a computer configured to determine the first static pressure Ps by averaging the first and the second intermediate static pressures Ps' and Ps".

7. The aircraft as claimed in claim 6, wherein the first and the second measurement probes (11, 12) are positioned on a fuselage (15) of the aircraft (100), on either side of a longitudinal axis (L) of the aircraft (100).

Fig. 1

Fig. 2

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CA 2783222
- WO 2013017746 A
- GB 2424957 A